# EUROPEAN PATENT APPLICATION

(11) **EP 4 538 868 A1**
(43) Date of publication of application: **16.04.2025**
(21) Application number: 23830386.1
(22) Date of filing: 29.06.2023
(51) Int. Cl.: G06F 8/70, G06F 8/71, G06F 9/445, G06F 8/61

(54) **APPLICATION MANAGEMENT METHOD AND RELATED DEVICE**

(30) Priority: 30.06.2022 CN 202210760319
(71) Applicant: Beijing Wellintech Co., Ltd., Beijing 100086 (CN)
(72) Inventor: LIN, Wei, Beijing 100086 (CN)
(74) Representative: Murgitroyd & Company
(86) International application number: PCT/CN2023/103690
(87) International publication number: WO 2024/002217

(57) **Abstract**

The present application relates to the technical field of software, and provides an application management method and a related device. In the present application, a first application repository can send a first download request to an application store, the first download request being used for requesting to download a first application from the application store. Then, the first application repository can receive the first application from the application store. That is, in the present application, an application program is transmitted by means of a repository, such that the transmission process is simplified, and a user can develop and run the application program more conveniently.

## Description

This application claims priority to Chinese Patent Application No. 202210760319.9, filed on June 30, 2022, which is incorporated in this application by reference in its entirety.

### TECHNICAL FIELD

The present disclosure relates to the field of software technologies, and in particular, to an application management method and a related device.

### BACKGROUND

An application program (application, APP), also known as an application, refers to a computer program for completing one or more specific tasks, which may run in a user mode and interact with users, and may have a visual user interface.

Currently, a developer of the application may put the developed application on the shelf in an application store, and a user who needs to use the application may download an installation package of the application from the application store and install the application in a local terminal (e.g. a mobile phone, a tablet, a smart television or the like) by the downloaded installation package of the application. Later, the user may run the application by the terminal.

However, currently, the process of downloading, installing, or other steps required for running the application by the terminal, is complicated, and affects the user's usage experience.

### SUMMARY

The present disclosure provides an application management method and a related device, which may simplify steps of running an application and facilitate a terminal to run the application.

Technical solutions of the present disclosure are as follows.

In a first aspect, the present disclosure provides an application management method, which is applied to a first application warehouse; and the method includes:
sending a first download request to an application store, where the first download request is used to request to download a first application in the application store, and the first application is stored in the application store; and receiving the first application from the application store.

In some implementations, the first application has an association relationship with a second application in the application store, and is capable of calling the second application to implement a function of the second application. The application management method further includes: receiving the second application from the application store.

In some implementations, the first application includes first information, and the first information is used to indicate the second application associated with the first application.

In some implementations, the first information includes an identifier of the second application. Identifiers of different applications in the application store are different.

In a second aspect, the present disclosure provides an application management method, which is applied to a second application warehouse; and the method includes:
sending a second download request to an application store, where the second download request is used to request to download a second application from the application store; and generating a first application based on the second application.

In some implementations, the application management method further includes: sending an application upload request to the application store, where the application upload request is used to indicate that the first application is to be uploaded to the application store; and sending the first application to the application store.

In some implementations, the application management method further includes: establishing an association relationship between the first application and the second application, where the first application is capable of calling the second application to implement a function of the second application; generating the first application based on the second application according to the association relationship; and sending the first application to the application store, where the first application includes the association relationship between the first application and the second application.

In the second aspect, the present disclosure provides an application management method, which is applied to an application store; and the method includes:
receiving a first download request from a first application warehouse, where the first download request is used to request to download a first application in the application store; and sending the first application to the first application warehouse in response to the first download request.

In some implementations, the application management method further includes: receiving the first application from a second application warehouse, in response to an application upload request sent by the second application warehouse.

In some implementations, a second application is stored in the application store, and the application management method further includes: receiving a second download request from a second application warehouse, where the second download request is used to request to download the second application; and sending the second application to the second application warehouse.

In some implementations, the application management method further includes: establishing an association relationship between the first application and the second application. The first application is capable of calling the second application to implement a function of the second application.

In some implementations, the first application includes first information, and the first information is used to indicate the second application associated with the first application.

In some implementations, the application management method further includes: sending the first application and the second application to the first application warehouse in response to the first download request, where the first application includes the association relationship between the first application and the second application.

In a fourth aspect, the present disclosure provides an application management apparatus, which is applied to a first application warehouse. The apparatus includes:
a sending module, configured to send a first download request to an application store, where the first download request is used to request to download a first application in the application store, and the first application is stored in the application store; and a receiving module, configured to receive the first application from the application store.

In some implementations, the first application has an association relationship with a second application in the application store, and is capable of calling the second application to implement a function of the second application. The receiving module is further configured to receive the second application from the application store.

In some implementations, the first application includes first information, and the first information is used to indicate the second application associated with the first application.

In some implementations, the first information includes an identifier of the second application. Identifiers of different applications in the application store are different.

In a fifth aspect, the present disclosure provides an application management apparatus, which is applied to a second application warehouse. The apparatus includes:
a sending module, configured to send a second download request to an application store, where the second download request is used to request to download a second application from the application store; and a processing module, configured to generate a first application based on the second application.

In some implementations, the sending module is further configured to send an application upload request to the application store, where the application upload request is used to indicate that the first application is to be uploaded to the application store. The sending module is further configured to send the first application to the application store.

In some implementations, the processing module is further configured to establish an association relationship between the first application and the second application, where the first application is capable of calling the second application to implement a function of the second application. The processing module is further configured to generate the first application based on the second application according to the association relationship. The sending module is further configured to send the first application to the application store, the first application including the association relationship between the first application and the second application.

In a sixth aspect, the present disclosure provides an application management apparatus, which is applied to an application store. The apparatus includes:
a receiving module, configured to receive a first download request from a first application warehouse, where the first download request is used to request to download a first application in the application store; and a sending module, configured to send the first application to the first application warehouse in response to the first download request.

In some implementations, the receiving module is further configured to receive the first application from a second application warehouse, in response to an application upload request sent by the second application warehouse.

In some implementations, a second application is stored in the application store. The receiving module is further configured to receive a second download request from a second application warehouse, where the second download request is used to request to download the second application. The sending module is further configured to send the second application to the second application warehouse.

In some implementations, the apparatus further includes a processing module. The processing module is further configured to establish an association relationship between the first application and the second application. The first application is capable of calling the second application to implement a function of the second application.

In some implementations, the first application includes first information, and the first information is used to indicate the second application associated with the first application.

In some implementations, the sending module is further configured to send the first application and the second application to the first application warehouse in response to the first download request, where the first application includes the association relationship between the first application and the second application.

In a seventh aspect, the present disclosure provides an electronic device. The electronic device includes: a processor and a memory for storing instructions executable by the processor, where the processor is configured to, when executing the instructions, cause the electronic device to implement the method according to any possible implementation of the first aspect, the second aspect or the third aspect.

In an eighth aspect, the present disclosure provides a computer-readable storage medium having computer program instructions stored thereon, where the computer program instructions, when executed by an electronic device, cause the electronic device to implement the method according to any possible implementation of the first aspect, the second aspect or the third aspect.

In a ninth aspect, the present disclosure provides a computer program product, including a computer-readable code, or a non-volatile computer-readable storage medium carrying a computer-readable code, where when the computer-readable code runs in an electronic device, a processor in the electronic device implements the method according to any possible implementation of the first aspect, the second aspect, or the third aspect.

Based on any of the first aspect to the ninth aspect described above, the present disclosure has at least the following beneficial effects.

In the present disclosure, the first application warehouse, the application store, and the second application warehouse all transmit the first application. That is, the second application warehouse may transmit the first application to the application store, and the first application warehouse may acquire the first application from the application store. In this way, after the first application is downloaded to the first application warehouse, a consumer may run the first application. Compared with the existing technical solutions, what the technical solutions of the present disclosure download is not an application installation package, and there is no need to install the first application. In this way, the application program is transmitted through the warehouses, which simplifies the process of the transmission, so that a user can develop and run the application program more conveniently.

It should be understood that the general description above and the detailed description below are only exemplary and explanatory, and cannot limit the present disclosure.

### BRIEF DESCRIPTION OF THE DRAWINGS

The drawings herein are incorporated in the specification and constitute a part of the specification, illustrate embodiments consistent with the present disclosure, and together with the specification, are used to explain principles of the present disclosure, but do not constitute improper limitations on the present disclosure.
FIG. 1 is a schematic diagram of a relationship between a model and a predefinition provided by the embodiments of the present disclosure.
FIG. 2 is a schematic diagram of data models provided by the embodiments of the present disclosure.
FIG. 3 is a flow schematic diagram of an application management method provided by the embodiments of the present disclosure.
FIG. 4 is another flow schematic diagram of an application management method provided by the embodiments of the present disclosure.
FIG. 5 is a schematic diagram of compositions of an APP model of a second application provided by the embodiments of the present disclosure.
FIG. 6 is yet another flow schematic diagram of an application management method provided by the embodiments of the present disclosure.
FIG. 7 is yet another flow schematic diagram of an application management method provided by the embodiments of the present disclosure.
FIG. 8 is a schematic diagram of compositions of an application management system provided by the embodiments of the present disclosure.
FIG. 9 is a structural schematic diagram of an application management apparatus provided by the embodiments of the present disclosure.
FIG. 10 is another structural schematic diagram of an application management apparatus provided by the embodiments of the present disclosure.
FIG. 11 is yet another structural schematic diagram of an application management apparatus provided by the embodiments of the present disclosure.
FIG. 12 is yet another structural schematic diagram of an application management apparatus provided by the embodiments of the present disclosure.

### DETAILED DESCRIPTION

In order to make those ordinary in the art to better understand the technical solutions of the present disclosure, the technical solutions in the embodiments of the present disclosure will be described below clearly and completely in conjunction with the drawings.

It should be noted that the terms "first", "second", etc., in the specification and claims as well as the above drawings of the present disclosure are used to distinguish similar objects, but are not necessarily used to describe a specific order or sequence. It should be understood that pieces of data so used may be exchanged in appropriate cases, so that the embodiments of the present disclosure described herein can be implemented in an order other than those illustrated or described herein. The implementations described in the following exemplary embodiments do not represent all implementations consistent with the present disclosure. Rather, they are merely examples of apparatus and methods consistent with some aspects of the present disclosure, as detailed in the appended claims.

It should also be understood that the term "include / including / included / comprise / comprising / comprised" indicates the presence of the described features, integers, steps, operations, elements and/or components, but does not exclude the presence or addition of one or more other features, integers, steps, operations, elements and/or components.

"And/or" is used to describe an association relationship between associated objects, which represents that there may be three kinds of relationships. For example, "A and/or B" may represent three cases: only A, both A and B, or only B. The character "/" generally represents an "or" relationship between the associated objects before and after "/".

An application program, also referred to as an application, refers to a computer program for completing a certain or multiple specific tasks, which may run in a user mode and interact with users, and may have a visual user interface.

Currently, a developer of the application may upload the developed application to an application store, and a user who needs to use the application may download an installation package of the application from the application store and install the application in a local terminal (e.g. a mobile phone, a tablet, a smart television or the like) by the downloaded installation package of the application. Here, the application store may be implemented on a hardware device such as a server, a computer or the like, and may also provide a user with an interactive application store interface, for the user to download a required application.

For example, the application store stores application A, application B, and application C. The local terminal may display an interface of the application store, and the interface of the application store includes: an icon of application A, an icon of application B, and an icon of application C. Then, in a case where the user needs application A, the local terminal may receive an operation for downloading application A from the user. In response to the operation for downloading application A, the local terminal may download an installation package of application A from the application store, and install application A to the local terminal by the installation package of application A.

However, after the application is stored in the local terminal, it will occupy storage resources of the local terminal, and affect the performance of the local terminal. Also, the terminal may run the downloaded application only after the download and installation of the application are completed. Therefore, the process of running the application by the terminal is relatively complicated. In addition, when running the application, the local terminal needs to allocate resources (e.g., memory resources) required for the running to the application, i.e., the running of the application will further occupy the resources of the local terminal. As such, the performance of the local terminal will be further affected, when running the application.

Based on this, the embodiments of the present disclosure provide an application management method, which may be applied to application warehouse(s) and an application store. Through this method, not only steps of running the application may be simplified, but also the storage resources of the local terminal occupied by the application may be effectively saved, thereby improving the performance of the local terminal.

It will be noted that in industry-related scenarios, an industrial Internet platform may be built based on hardware devices such as a server, a computer or the like, and the industrial Internet platform may include application warehouse(s) and an application store. A developer of the application may put the developed application on the shelf in the industrial Internet platform, and a user who needs to use the application may download and use the application from the industrial Internet platform.

For example, the method may be implemented on hardware devices corresponding to the application warehouse(s) and the application store. For example, the hardware device may include a server, a computer or the like. Here, the server may be a single server, or a server cluster composed of multiple servers. In some implementations, the server cluster may be a distributed cluster. The specific implementation of the hardware devices corresponding to the application warehouse(s) and the application store is not limited in the present disclosure.

It will be noted that the implementation steps at the application warehouse side involved in the embodiments of the present disclosure may all be implemented by the hardware device(s) corresponding to the application warehouse(s). The implementation steps at the application store side involved in the embodiments of the present disclosure may all be implemented by the hardware device corresponding to the application store. Here, the application warehouse(s) and the application store may be deployed on a same hardware device. Or, the application warehouse(s) and the application store may be deployed on different hardware devices.

Taking the application warehouse(s) and the application store as an example, the application management methods provided by the embodiments of the application are introduced below. Here, the application warehouse(s) may include a first application warehouse and a second application warehouse. The first application warehouse is an application warehouse used by consumers, and the second application warehouse is an application warehouse used by developers.

It will be noted that the consumers refer to users who use terminals to run applications. The developers are users who develop applications.

In the embodiments of the present disclosure, a method for managing applications may be divided into four stages, and the four stages include: stage 1, stage 2, stage 3 and stage 4. Here, stage 1 is to develop an application on a development platform and generate the developed application (which may be referred to as a finished product application). Stage 2 is to upload the finished product application to the second application warehouse. Stage 3 is to upload the finished product application from the second application warehouse to the application store. Stage 4 is to download the finished product application from the application store to the first application warehouse.

The stage 1, i.e., the process of uploading the developed application (which may be referred to as a finished product application) to the second application warehouse, is first described below.

In some embodiments, a first application (i.e., the finished product application) may only implement a program logic of functional functions of the first application itself.

In the embodiments of the present disclosure, the process of developing the first application may be as follows.
1) Create an APP model (i.e. an application model) of the first application, and assign a unique identifier (e.g., a globally unique identifier) to the APP model of the first application. For example, a developer of the first application may create the APP model of the first application in a development studio.
2) Define a data model that the APP model of the first application depends on, and publish a data predefinition of the data model that the APP model of the first application depends on (which is briefly referred to as a data predefinition of the second application).

It will be noted that the concepts of the model and the predefinition are mentioned in the present disclosure, where the model is information that describes a structure of an object when modeling an abstraction, and the predefinition is information of parameter(s) configured for the model whose structure has been determined. The predefinition records the information of the model and the predefinition is used to instantiate the object, which means building a structure of the object according to the structure of its model and taking the parameter value as an initial value of the object. The predefinition can also be referenced by other models as a sub-predefinition.

For example, when creating the data model, operations may include: creating a model newly, assigning a name and an identifier; adding member(s), specifying a member type; deleting member(s); adding or deleting sub-predefinition(s); setting an initial value of the sub-predefinition; updating a model version; publishing a certain model version and generate a predefinition, etc. When creating a predefinition, operations may include: specifying a certain model version and publishing (creating) the predefinition; assigning a name and an identifier; setting parameter values (values of attributes and values of members) of the predefinition, etc.

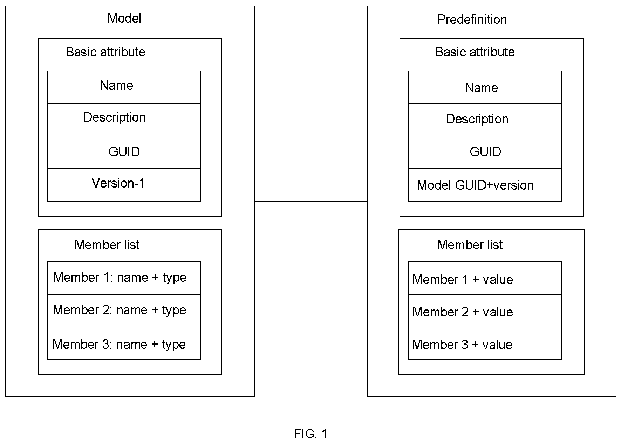

FIG. 1 is a schematic diagram of a relationship between a model and a predefinition provided by the embodiments of the present disclosure.

As shown in FIG. 1, the model may include a basic attribute and a member list; the basic attribute may include information such as name, description, globally unique identifier (GUID), version, etc.; and the member list may include: information such as "member 1: name + type", "member 2: name + type", "member 3: name + type", etc..

The predefinition may include a basic attribute and a member list; the basic attribute may include information such as name, description, GUID, model GUID + version, etc.; and the member list may include: information such as "member 1 + value", "member 2 + value", "member 3 + value", etc.

The data model described in the step 2) is a concept in the database, which describes the structure of the data object in the database and is an abstract description of the object in the objective world.

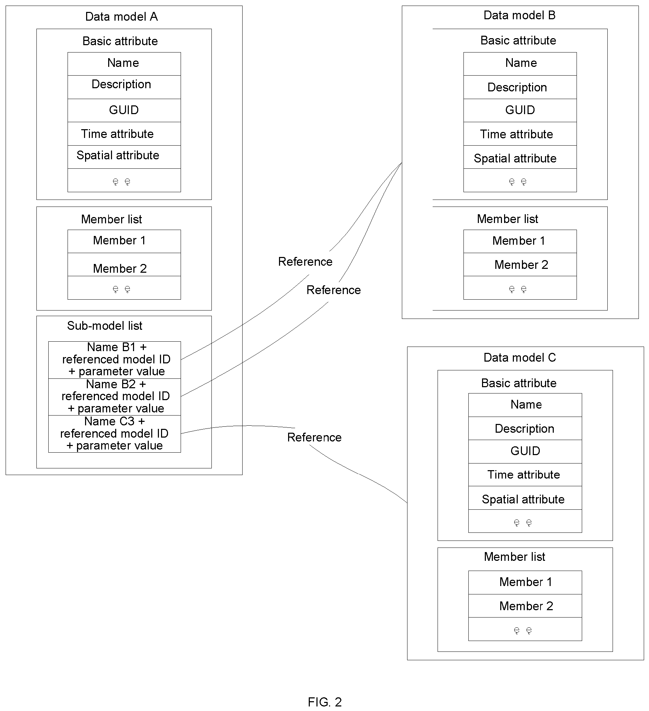

For example, FIG. 2 is a schematic diagram of a data model provided by the embodiments of the present disclosure. As shown in FIG. 2, the data model may include: a basic attribute, a member list, and a sub-model list. A data model with sub-models is a composite data model, for example, a data model A in the figure is a composite data model, and a data model B and a data model C are sub-models of the data model A.

In the data model, the basic attribute describes inherent attributes of data, including name, description, GUID, time attribute (such as precision), spatial attribute (such as coordinate system, geometric shape), etc.; and the member list describes freely defined fields, where each member describes its field name and data type, such as member 1, member 2, etc. The sub-model list records identifiers of data predefinitions of data models referenced as the sub-models, and establishes a dependency relationship between the sub-model and the data model, and for example, the sub-model list of the data model A includes identifiers of data predefinitions of the data model B and the data model C, such as "name B1 + referenced model ID + parameter value", "name B2 + referenced model ID + parameter value", "name C3 + referenced model ID + parameter value", etc.

For example, a motor device has parameters such as rotate speed, temperature, electric current, etc. A data model of the motor device is established, and the data model of the motor device may include members of the rotate speed, temperature, and electric current. The same type of motors may be described uniformly by the data model of the motor device.

For another example, assuming that there are a fixed disk production line, a static disk production line, and a full assembly production line inside a compressor workshop. A data model of the compressor workshop is established, and the interior of the data model of the compressor workshop may include sub-models: the fixed disk production line, the static disk production line, the full assembly production line, etc. The data model of the compressor workshop may describe the same type of compressor workshop models.

3) Define a resource object that the APP model of the first application depends on (referred to as a resource object of the first application, briefly) into a resource repository, and assign a unique identifier (such as a globally unique identifier) to the resource object of the first application.

Here, the resource object is a concept in the database. Objectified organization and management are performed on binary file data, and an identifier is assigned to each resource object, so that the APP model of the first application can access the data of the resource object by the identifier of the resource object.

For example, an icon is defined as a resource object to form a dependency relationship with the APP model of the first application, and then the APP model of the first application may use this icon. For another example, a video file is defined as a resource object to form a dependency relationship with the APP model of the first application, and then the APP model of the first application may read, by the dependency relationship, the video file for playback.

4) Establish a dependent data predefinition list of the second application on the APP model of the second application, select a data predefinition of the second application from the system warehouse of the second application, and record the identifier of the data predefinition of the second application onto the dependent data predefinition list of the second application. The data predefinition in the system warehouse of the second application may be established by the developer himself, or purchased from the application store.

5) Establish a dependent resource list of the second application on the APP model of the second application, select a resource object of the second application from the resource repository, and record the identifier of the resource object of the second application onto the dependent resource list of the second application. Herein, the resource object in the resource repository may be established by the developer himself, or purchased from the application store.

6) Write a program logic of functional functions of the APP model of the first application.

7) Generate a predefinition of the APP model of the first application (which is briefly referred to as a predefinition of the first application, or may also be referred to as configuration information of the first application) according to the APP model of the first application, and assign a unique identifier (e.g., a globally unique identifier) to the predefinition of the first application. The identifier of the predefinition of the first application is an identifier of the first application.

Here, when the predefinition of the first application is published, parameter values of the predefinition (e.g., values of attributes and values of members) may also be set.

In some other embodiments, the first application (i.e. the finished product application) may implement the program logic of functional functions of a plurality of applications. The following introduces the process of developing the first application by taking an example in which the plurality of applications include a first application and a second application.

In the embodiments of the present disclosure, the process of developing the first application may be as follows.
a), Perform the above step 1) to step 5).
b), Add a sub-APP list of the APP model of the first application, select a predefinition of the second application that is a sub-APP from the system warehouse of the first application, and record an identifier of the predefinition of the second application on the sub-APP list of the APP model of the first application. The predefinition of the second application is the second application acquired from the application store. The identifier of the predefinition of the second application is the identifier of the second application described in the above-described embodiments.
   It should be noted that the predefinition of the second application may be uploaded to the application store by a copyright owner or a developer of the second application. Also, an icon logo of the second application, an application description, and a price list of the second application may be added to the application store.
c), Perform the above step 6) to step 7).

It can be understood that the development process of the second application is similar to the development process of the first application. The only difference is that when the second application does not include a deeper level of sub-APPs (i.e., the second application does not call other applications to implement function(s) of other applications), the development process of the second application does not include a process similar to that described in the above step 6). When the second application also includes a deeper level of sub-APPs (i.e., the second application calls other applications to implement function(s) of other applications), the development process of the second application is consistent with the process described in the above step 1) to step 8). The development process of the second application will not be repeated here.

After the development of the first application is completed, the stage 2, i.e., the process of uploading the finished product application to the second application warehouse, is introduced below.

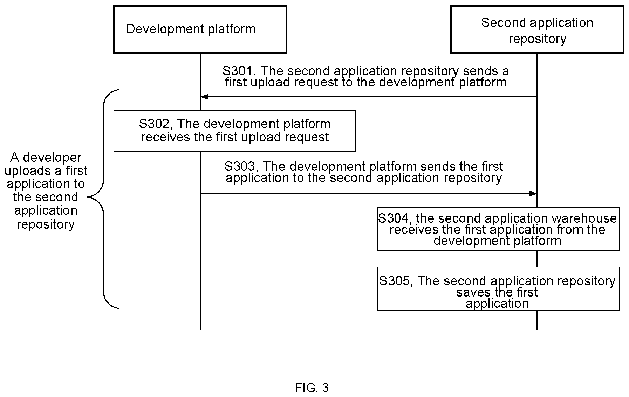

FIG. 3 is a flow schematic diagram of an application management method provided by the embodiments of the present disclosure. As shown in FIG. 3, the application management method may include the following contents.

In S301, a second application warehouse sends a first upload request to a development platform.

Here, the first upload request is used to request the development platform to upload a first application.

In one possible implementation, the second application warehouse receives a first upload operation, and the first upload operation is used to indicate to upload the first application stored in the development platform to the second application warehouse. The second application warehouse sends the first upload request to the development platform, in response to the first upload operation.

In the embodiments of the present disclosure, the development platform is used to generate the first application.

In one possible design, the first application includes configuration information of the first application, the configuration information of the first application is generated by an application model of the first application, and the application model of the first application is used to indicate a program code of the first application. The application model of the first application is used to implement a program logic of functional functions of the first application.

For example, a data model in application A is capable of implementing function A, function B and function C, and the data model of application A includes: a program code for implementing function A, a program code for implementing function B, a program code for implementing function C, and a program code for describing a logical relationship between function A, function B and function C.

In one possible design, the development platform may be deployed in a cloud server.

It can be understood that in a case where the development platform is deployed in the cloud server, resources of the local terminal of the developer will not be occupied when the developer develops the application program on the development platform. In this way, the resources of the local terminal of the developer may be saved and the performance of the local terminal of the developer may be improved.

In another possible design, the development platform may be deployed in a development local server (i.e., a local terminal).

It can be understood that, in a case where the development platform is deployed in the local server, the speed of acquiring local data may be increased when developing the application program on the development platform. In this way, the development efficiency may be improved and programming time for developing the application may be reduced.

It should be noted that in general, in order to avoid occupying too many resources of the local server, the development platform may be deployed in the local server, in a case where the data volume of the application program is less than a preset data volume threshold. For example, the preset data volume threshold may be 10 megabytes. For another example, the preset data volume threshold may be 100 megabytes. For another example, the preset data volume threshold may be 150 megabytes.

In S302, the development platform receives the first upload request.

In one possible design, the first upload request includes an identifier of the first application.

In some embodiments, a correspondence between the first application and the identifier of the first application is stored in the development platform. The development platform may query the first application according to the identifier of the first application.

In S303, the development platform sends the first application to the second application warehouse.

In S304, the second application warehouse receives the first application from the development platform.

In S305, the second application warehouse stores the first application.

It should be noted that a terminal in which the second application warehouse is deployed is not limited in the embodiments of the present disclosure.

In one possible design, the second application warehouse may be deployed in a cloud server.

That is, the first application may be stored in the cloud server.

In another possible design, the second application warehouse may include a third sub-warehouse and a fourth sub-warehouse. Here, the third sub-warehouse is deployed in the cloud server, and the fourth sub-warehouse is deployed in the local server. The third sub-warehouse is used to store the first application.

That is, the first application may be stored in a warehouse that is deployed in the cloud server.

It can be understood that after the development of the first application is completed, the development platform may upload the first application to the second application warehouse. In this way, the developed application does not need to occupy the local terminal of the developer. In this way, the resources of the local terminal of the developer may be saved and the performance of the local terminal may be improved.

In some embodiments, before the development platform uploads the first application to the second application warehouse, the second application warehouse may download a second application from the application store, and an association relationship between the first application and the second application is established by the development platform.

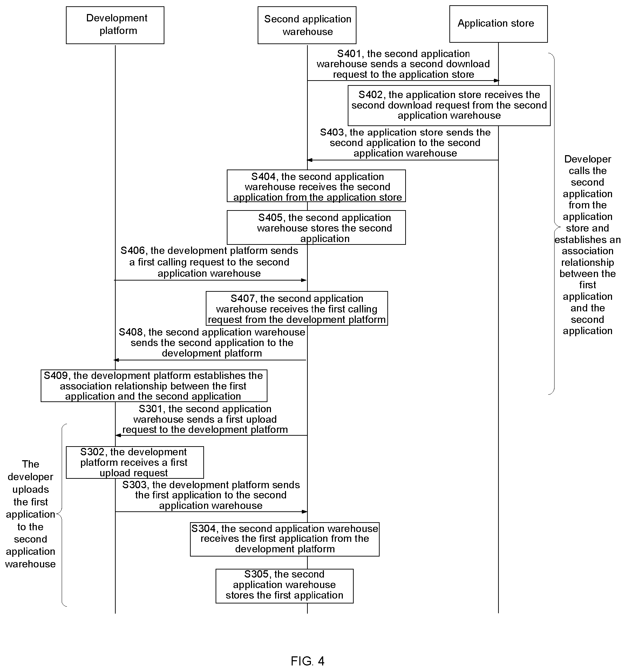

FIG. 4 is a flow schematic diagram of an application management method provided by the embodiments of the present disclosure. As shown in FIG. 4, the application management method may include the following contents.

In S401, the second application warehouse sends a second download request to the application store.

Here, the second download request is used to request to download a second application.

In the embodiments of the present disclosure, the second application is stored in the application store. The second application may include configuration information of the second application, the configuration information of the second application is generated by an application model of the second application, and the application model of the second application is used to indicate a program code of the second application.

In S402, the application store receives the second download request from the second application warehouse.

In one possible design, the second download request includes an identifier of the second application.

In some embodiments, a correspondence between the second application and the identifier of the second application is stored in the application store. The development platform may query the second application according to the identifier of the second application.

In S403, the application store sends the second application to the second application warehouse.

In S404, the second application warehouse receives the second application from the application store.

In some embodiments, after the second application warehouse sends the second download request to the application store, the second application warehouse may generate the first application based on the second application.

In S405, the second application warehouse stores the second application.

In the embodiments of the present disclosure, the second application may be stored into the second application warehouse deployed in the cloud server.

It can be understood that the second application warehouse may download the second application from the application store and store the second application. That is, the second application may store a plurality of applications, such as the first application and the second application. In this way, not only resources of the local terminal may be saved, but also the development platform may call other applications from the second application warehouse, to improve the development efficiency.

In some embodiments, the developer or the copyright owner may establish an association relationship between the first application and the second application, so that the first application is capable of calling the second application to implement a function of the second application. As shown in FIG. 4, the application management method may further include the following contents.

In S406, the development platform sends a first calling request to the second application warehouse.

Here, the first calling request is used to request to call the second application.

In S407, the second application warehouse receives the first calling request from the development platform.

In some embodiments, the second application warehouse stores the correspondence between the second application and the identifier of the second application. After the second application warehouse receives the first calling request from the development platform, the second application warehouse searches for the second application according to the identifier of the second application.

In S408, the second application warehouse sends the second application to the development platform.

Accordingly, the development platform receives the second application from the second application warehouse.

In S409, the development platform establishes an association relationship between the first application and the second application.

Here, after the association relationship is established between the first application and the second application, the first application is capable of calling the second application to implement the function of the second application.

In one possible implementation, the development platform adds the identifier of the second application to the application model of the first application. Or, the development platform may add the identifier of the second application into the first application, or add some fields capable of indicating the second application. The identifier of the second application or the fields capable of indicating the second application is the above-described first information. That is, the first information may include: the identifier of the second application or some fields capable of indicating the second application.

In the present disclosure, identifiers of different applications in the application store are different. That is, different applications in the application store have unique identifiers.

It should be noted that copyright owners of the first application and the second application are the same or different. Developers of the first application and the second application are the same or different.

In this way, when calling the first application, the second application may be called according to the identifier of the second application, to implement the function of the second application.

Optionally, the second application warehouse may establish the association relationship between the first application and the second application. After that, the second application warehouse may generate the first application based on the second application according to the association relationship between the first application and the second application.

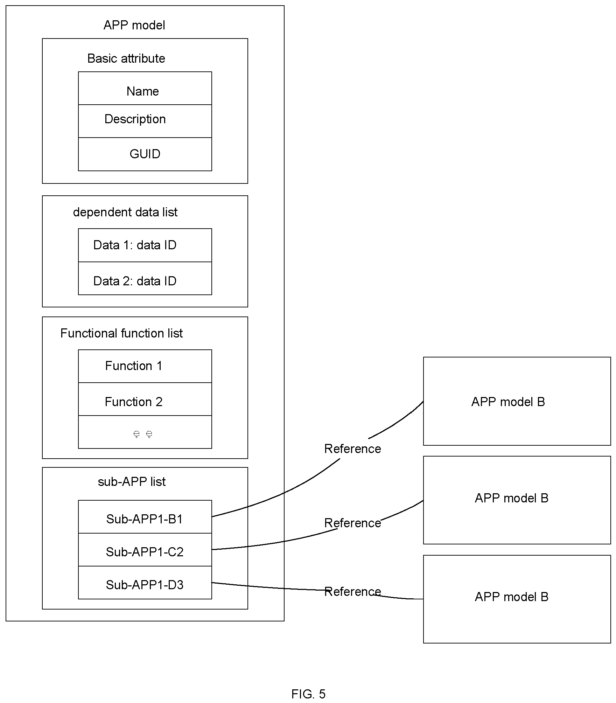

For example, FIG. 5 is a schematic diagram of compositions of an APP model of a first application provided by the embodiments of the present disclosure.

As shown in FIG. 5, the application model of the first application may include: a basic attribute, a dependent data list, a functional function list, and a sub-APP list.

The basic attribute may include: name, description, and GUID (i.e., a unique identifier of the application model of the first application).

The dependent data list records data models or resource objects that the application model of the first application needs to use, and establishes a relationship between the application model of the first application and the dependent data model or resource object. For example, "data 1: data ID", "data 2: data ID", etc., represent identifiers of data predefinitions of the dependent data models or identifiers of resource objects. The dependent data list may include the above-described dependent data predefinition list and/or the above-described dependent resource list.

The functional function list may include: function 1, function 2, and other functional functions of the APP model of the first application, and these functional functions are the implementation of the program logic of the application model of the first application.

The sub-APP list records information of the second application, and establishes an association relationship between the application model of the first application and the second application. For example, the sub-APP list may include identifiers and configuration parameters of second applications such as sub-APP-B1, sub-APP-C2, sub-APP-D3, etc. That is, application model B, application model C, application model D, etc., may be the above-described second application.

In another possible implementation, the development platform adds a predefinition of the second application (i.e. the configuration information of the second application) to the first application.

For example, if application A includes function A and function B, and application B includes function C, after an association relationship is established between application A and application B, application A is capable of calling application B to implement function C.

It can be understood that the development platform calling the second application from the second application warehouse may establish the association relationship between the first application and the second application. In this way, the developer does not need to develop the second application, and may enable the first application to call the second application to implement the function of the second application, that is, calling the first application may implement the function of the second application.

In some other embodiments, the developer of the second application and the developer of the first application are the same, and the developer may complete the development of the second application locally, develop and generate the first application according to the second application, and then put the second application and the first application on the shelf in the application store.

In some embodiments, after the first application is uploaded to the second application warehouse, the developer or the copyright owner may upload the first application to the application store (i.e., stage 3).

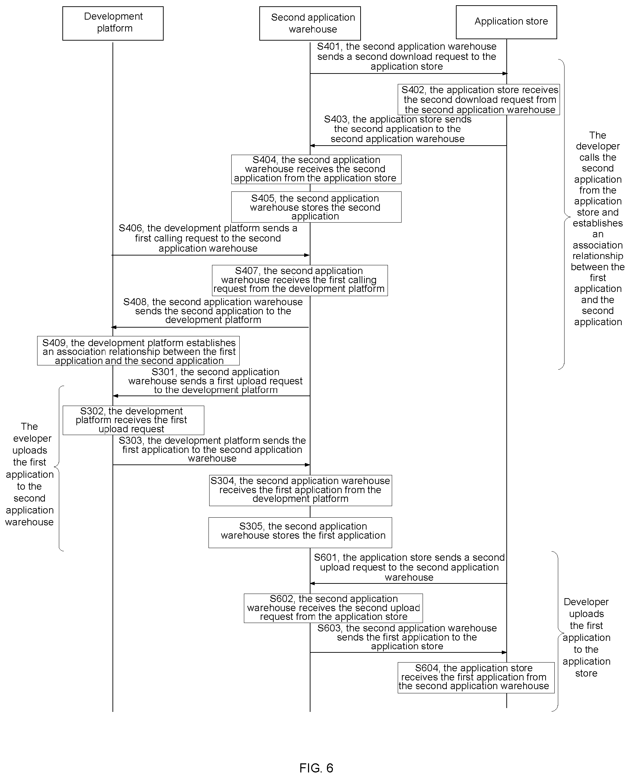

FIG. 6 is a flow schematic diagram of an application management method provided by the embodiments of the present disclosure. As shown in FIG. 6, the application management method includes the following contents.

In S601, the application store sends a second upload request to the second application warehouse.

Here, the second upload request is used to indicate to upload the first application to the application store.

In one possible implementation, the application store receives a second upload operation, and the second upload operation is used to indicate to upload the first application to the application store. The application store sends the second upload request to the second application warehouse, in response to the second upload operation.

In S602, the second application warehouse receives the second upload request from the application store.

In one possible design, the second upload request includes an identifier of the first application.

In some embodiments, the second application warehouse searches for the first application according to the identifier of the first application.

In S603, the second application warehouse sends the first application to the application store.

In some embodiments, the second application warehouse sends the first application to the application store, where the first application includes an association relationship between the first application and the second application.

In S604, the application store receives the first application from the second application warehouse.

In some embodiments, after receiving the first application, the application store may store the first application.

It can be understood that after the first application is uploaded to the application store, the application store may store the first application. In this way, the consumer may download the first application from the application store and run the first application. There is no need to install the first application again, which reduces the procedure of running the first application and improves user's usage experience.

In some other embodiments, the second application warehouse sends an application upload request to the application store, and sends the first application to the application store, where the application upload request is used to indicate that the first application is to be uploaded to the application store.

Optionally, the application upload request includes the first application.

It can be understood that the second application warehouse sends the application upload request to the application store, and sends the first application to the application store. In this way, the first application may be transmitted to the application store, thereby simplifying the process of transmitting the application.

In the embodiments of the present disclosure, the application store receives the first application from the second application warehouse, in response to the application upload request sent by the second application warehouse.

In some embodiments, after the first application and the second application are stored in the application store, the application store may establish an association relationship between the first application and the second application.

For example, if a function that the second application may implement is a second function, even though a code for implementing the second function is not included in the first application, the first application may implement the second function by calling the second application.

By establishing the association relationship between the first application and the second application, when the first application is downloaded, the application store is capable of distributing the first application and the second application together. For example, a user may use a user device (e.g., a mobile phone, a computer or the like) to send a request for downloading the first application to the application store. The application store may distribute the first application to the user device in response to the request, and meanwhile, since the association relationship is established between the first application and the second application, the application store may distribute the second application to the user device together based on the association relationship. When the user device runs the downloaded first application, the first application may call the downloaded second application to implement the function of the second application.

An implementation for establishing the association relationship between the first application and the second application is illustrated exemplarily below.

In some implementations, the first application may include first information, and the first information is used to indicate the second application associated with the first application. The application store establishing the association relationship between the first application and the second application may include: establishing the association relationship between the second application and the first application based on the first information included in the first application; or using the first information included in the first application as the association relationship between the second application and the first application.

In a case where the application store stores an application therein, the first application warehouse may acquire the application from the application store. The stage 4, i.e., downloading a finished product application from the application store to the first application warehouse, is introduced below.

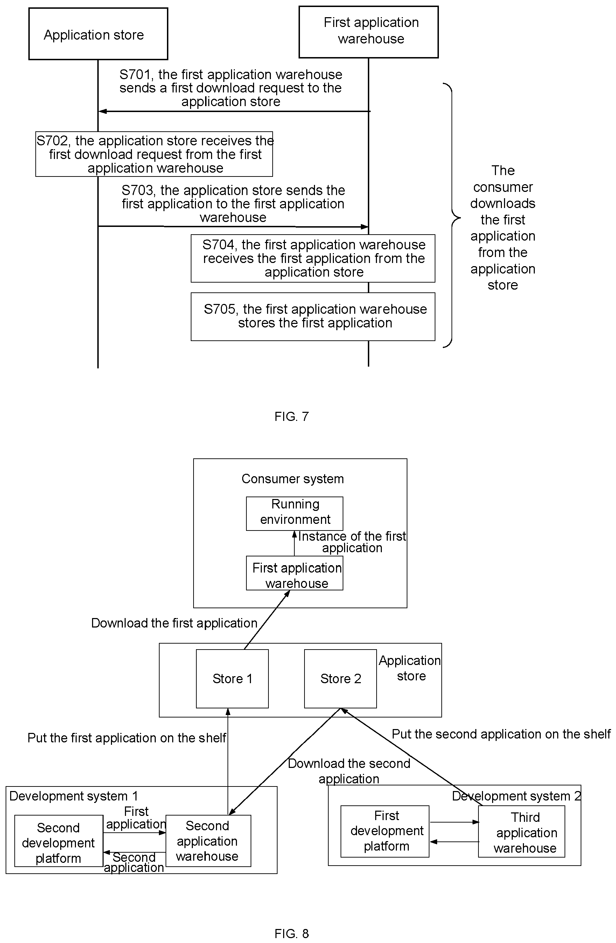

FIG. 7 is a flow schematic diagram of an application management method provided by the embodiments of the present disclosure. As shown in FIG. 7, the application management method may include the following contents.

In S701, the first application warehouse sends a first download request to the application store.

Here, the first download request is used to request to download a first application in the application store, and the first application is stored in the application store.

In one possible implementation, the first application warehouse may receive a first download operation (e.g., an operation for purchasing the first application), and the first download operation is used to request to acquire a permission to use the first application. The first application warehouse sends the first download request to the application store, in response to the first download operation.

In S702, the application store receives the first download request from the first application warehouse.

Here, the first download request includes an identifier of the first application.

In some embodiments, a correspondence between the first application and the identifier of the first application is stored in the application store. The application store may search for the first application according to the identifier of the first application.

In S703, the application store sends the first application to the first application warehouse.

In one possible implementation, the application store sends a predefinition of the first application to the first application warehouse, in response to the first download request, and the predefinition of the first application includes an application model of the first application.

In S704, the first application warehouse receives the first application from the application store.

In S705, the first application warehouse stores the first application.

That is, the first application warehouse stores configuration information of the first application, i.e., a program logic of functional functions of the first application and configuration data of the first application are stored in the first application warehouse.

It can be understood that after the first application is downloaded to the first application warehouse, the consumer may run the first application (i.e., the configuration information of the first application). Compared with the existing technical solutions, what the technical solutions of the present disclosure download is not an application installation package, and there is no need to install the first application. In this way, the procedure of running the first application may be reduced, thereby improving user's usage experience.

In some embodiments, the first application warehouse may be deployed in a cloud server. That is, the first application may be stored in the cloud server.

In some other embodiments, a portion of the first application warehouse may be deployed in the cloud server, and another portion of the first application warehouse may be deployed in a local terminal. The first application warehouse includes a first sub-warehouse and a second sub-warehouse. Here, the first sub-warehouse is deployed in the cloud server, and the second sub-warehouse is deployed in the local terminal.

It should be noted that the first application is stored in the first sub-warehouse. That is, the first application may be stored in the cloud server.

It can be understood that the first application being stored in the cloud server may avoid occupying storage resources of the local terminal. In this way, the resources of the local terminal may be saved, thereby improving the performance of the local terminal.

In some embodiments, the first application has an association relationship with the second application in the application store, and is capable of calling the second application to implement a function of the second application. After the first application warehouse sends the first download request to the application store, the application store may send the first application and the second application to the first application warehouse, in response to the first download request.

In the embodiments of the present disclosure, the first application includes first information, and the first information is used to indicate the second application associated with the first application. Here, the first information includes an identifier of the second application.

In one possible implementation, after the first application warehouse sends the first download request to the application store, the application store may search for the first application according to the identifier of the first application. After that, the second application is searched according to the identifier of the second application in the first application. After that, the application store sends the first application and the second application to the first application warehouse. The first application warehouse may receive the first application and the second application from the application store. After that, the first application warehouse may store the first application and the second application.

That is, in the embodiments of the present disclosure, the first application warehouse may store the predefinition of the first application and the predefinition of the second application.

It can be understood that after the first application and the second application are downloaded to the first application warehouse, the consumer may download the first application and the second application from the application store and run the first application. Compared with the existing technical solutions, what the technical solutions of the present disclosure download is not an application installation package, and there is no need to install the first application. In this way, the procedure of running the first application may be reduced, thereby improving user's usage experience. Also, the user only needs to download the first application, to implement downloading the first application and the second application simultaneously, and may call the function of the second application after running the first application, thereby reducing steps of downloading and running the second application by the terminal.

In some embodiments, after the first application is stored in the first application warehouse, the user may run the first application by a target computing node. Here, the target computing node may be a cloud server. Or, the target computing node may be a local terminal.

It should be noted that the cloud server in which the application store and application warehouses are deployed and the cloud server corresponding to the target computing node may be a same cloud server or different cloud servers, which is not limited in the embodiments of the present disclosure.

In one possible implementation, a first running request may be generated in response to a first running operation (e.g., double-clicking an icon of the first application), where the first running operation is used to trigger the running of the first application, and the first operating request is used to request the running of the first application. The first application warehouse may receive the first running request. After that, the first application warehouse sends the first application to the target computing node, so that the target computing node creates an instance of the first application and deploys the functional logic of the first application in the target computing node; where the target computing node is used to run the instance of the first application by target resources.

In one possible design, the first application warehouse sends a second indication message to the target computing node, and the second indication message is used to indicate the target computing node to allocate the target resources for running the first application. Here, the second indication message may include the first application and second information, and the second information is used to indicate a number of the target resources.

For example, the target resources include: a first number of central processing unit (CPU) resources, a second number of memory resources, a third number of network bandwidths, etc. For example, the target resources include: 5% of CPU resources, 8% of memory resources, and 100 megabytes of network bandwidth.

The target computing node may receive the second indication message. After that, the target computing node creates the instance of the first application according to the configuration information of the first application (i.e. the predefinition of the first application), determines the application model of the first application according to an identifier of the configuration information of the first application, and deploys the program logic of the functional functions in the application model of the first application in the target computing node.

It should be noted that the predefinition of the application carries an identifier of the application model of the application. The target computing node may determine an identifier of the application model of the first application from the predefinition of the first application. After that, the target computing node determines the application model of the first application according to the identifier of the application model of the first application, and deploys the program logic of the functional functions of the application model of the application in the target computing node.

For example, if the identifier of the application model of application A stored in the predefinition of application A is identifier a, the target computing node may acquire the application model of application A according to identifier a, and deploy the program logic of functional functions of the application model of application A in the target computing node.

In another possible design, the first application warehouse may send the first application to an operation and maintenance computing node, where the operation and maintenance computing node is used to maintain the running of the first application. After that, the operation and maintenance computing node may send the second indication message to the target computing node.

Optionally, resource information of a plurality of computing nodes is stored in the first application warehouse or an operation and maintenance system (i.e. the operation and maintenance computing node), and the resource information of a computing node is used to reflect a number of available resources in the computing node. The first application warehouse or the operation and maintenance system may determine the target computing node according to the resource information of the plurality of computing nodes, where the target computing node is a computing node with the most available resources among the plurality of computing nodes.

It can be understood that the first application warehouse receives the first running request and sends the first application to the target computing node, so that the target computing node creates the instance of the first application and deploys the functional logic of the first application in the target computing node; where the target computing node is used to run the instance of the first application by the target resources. That is, the first application in the embodiments of the present disclosure, after being downloaded from the application store to the first application warehouse, may run directly without installation, so that the procedure of running the application is reduced. Also, the first application may run in the target computing node without occupying resources of the local terminal, so as to improve the performance of the local terminal.

Optionally, in the present disclosure, the first application may be referred to as a finished product APP, and a sub-APP of the first application (e.g. the second application) may be referred to as a part APP. The finished product APP may be a program that is capable of running independently. The part APP may be an APP program that is capable of running independently or a program that does not run independently. The part APP is capable of serving as a sub-APP of one or more finished product APPs, and implemented as being called by a finished product APP to implement function(s) of the part APP.

It can be understood that the part APP and the finished product APP are relative concepts, and any application that serves as a sub-APP may be called a part APP. For example, if there is a third application that may call the first application to implement function(s) of the second application, the third application is a finished product APP and the first application is a part APP.

The application management method provided in the embodiments of the present disclosure is further described below with a specific example.

FIG. 8 is a schematic diagram of compositions of an application management system provided by the embodiments of the present disclosure. As shown in FIG. 8, the application management system may include at least one development system (e.g. development system 1 and development system 2), at least one application store, and at least one consumer system.

Here, development system 1 includes development platform 1 (i.e., a second development platform) and application warehouse 1 (i.e., a second application warehouse). Development platform 1 may be used to develop a finished product APP (e.g., the first application described above), and application warehouse 1 is used to store the finished product APP of which the development is completed and other sub-APPs. A developer of the finished product APP may download a part APP from the application store to application warehouse 1. After that, the developer may send the part APP in application warehouse 1 to development platform 1. Development platform 1 may call the part APP to generate the finished product APP, and the finished product APP has an association relationship with the part APP and is capable of calling the part APP to implement a function of the part APP. After that, development platform 1 may publish the finished product APP to application warehouse 1, and put the finished product APP on the shelf in the application store. Here, application warehouse 1 may upload the finished product APP to the application store via the Internet.

Development system 2 includes development platform 2 (i.e., a first development platform) and application warehouse 2 (i.e., a third application warehouse). Development platform 2 may be used to develop a part APP (e.g., the second application described above), and application warehouse 2 is used to store the part APP of which the development is completed and other sub-APPs. The developer or the copyright owner may put the part APP on the shelf in the application store.

Optionally, development system 1 and development system 2 may be a same development system (e.g., development system 1). That is, development platform 1 in development system 1 may develop both the finished product APP and the part APP. Similarly, application warehouse 1 may store the finished product APP and the part APP, and put the finished product APP and the part APP on the shelf in the application store.

It should be noted that the development platform may develop an application model of the application and store the application model into an underlying database of the development platform. The application warehouse may store the application (i.e., the configuration information of the application or the predefinition of the application) in an underlying database of the application warehouse. The development platform and the application warehouse are two service systems that transmit data via the network communication.

The application store is used to store the finished product APP and the part APP of which the development is completed. Also, an association relationship between the finished product APP and the part APP is stored in the application store. Also, the copyright owner may create resources corresponding to the application in the application store, including uploading the predefinition of the finished product APP and the predefinition of the part APP, uploading the icon of the application, adding the description of the application, setting the price of the application and so on. Also, the application store may transmit the finished product APP and the part APP to the consumer system, in response to a download operation. The application store may display relevant information about the application (e.g., the icon, description, price and so on) to users (consumers and developers).

It should be noted that when the copyright owner of the finished product APP downloads the part APP from the application store to the application warehouse 1, he or she needs to pay a fee to download the APP, or does not need to pay a fee.

For example, the application store may include store 1 and store 2, where store 1 is used to store and display finished product APPs, and store 2 is used to store and display part APPs. Store 1 and store 2 occupy different partitions in a database of the application store. Optionally, the finished product APPs and part APPs may be stored in a same store (e.g., store 1).

The consumer system includes application warehouse 3 (i.e. a first application warehouse), and application warehouse 3 may be a warehouse at the consumer (user) side that uses the first application. The consumer may use a local terminal to download the finished product APP from the application store to application warehouse 3. When the consumer uses a user device to download the finished product APP from the application store, the application store may distribute the finished product APP and the part APP associated with the finished product APP together to the consumer system. Here, application warehouse 3 may be deployed in the local terminal or a cloud server.

Application warehouse 3 may download the first application and generate an instance of the first application. After that, application warehouse 3 may send the instance of the first application to a running environment, so that the running environment runs the first application.

Optionally, the consumer system may also include an operation and maintenance system, and the operation and maintenance system is used to maintain the running of the APP. When application warehouse 3 has received an instruction for running the finished product APP, application warehouse 3 may send the finished product APP to the operation and maintenance system. After that, the operation and maintenance system may create an instance of the finished product APP according to the finished product APP, and send the instance of the finished product APP to the running environment. At the same time, the operation and maintenance system may indicate the running environment to allocate target resources to the instance of the finished product APP. The operation and maintenance system may determine an application model of the finished product APP according to an identifier of the predefinition of the finished product APP, and deploy the program logic of functional functions of the application model of the finished product APP in the running environment. After that, the operating environment may call the target resources to run the instance of the finished product APP, and execute the program logic of the functional functions of the finished product APP. Here, the instance of the finished product APP includes the identifier of the predefinition of the finished product APP (i.e., the identifier of the finished product APP). The operation and maintenance system, the application warehouse, and the running environment complete the deployment process of APP program files via the network communication.

Here, the running environment may be deployed in the target computing node.

Optionally, the application store may include a store system consisting of a store system and a trading system. The store system may serve as a commodity trading circulation system operated by an operator of the application store. The APP software development enterprise (i.e., the developer) and the APP software manufacturing enterprise (i.e., the consumer) may complete the trading and sharing of the APP by the store system. Herein, the store system may include one or more stores, used to store APP products put on the shelf, and to be responsible for shelving, downloading, authorization key distribution of the APP, or the like. The trading system may implement functions such as order management, payment management, etc.

It can be understood that in actual implementations, the application store, the application warehouses, the local terminal or the like described in the embodiments of the present disclosure may include one or more hardware structures and/or software modules for implementing the corresponding application management methods described above, and these hardware structures and/or software modules for execution may constitute an electronic device. It shall be easily recognized by those skilled in the art that, the algorithm steps of various examples described in conjunction with the embodiments in the present disclosure, the present disclosure can be implemented in the form of hardware or a combination of hardware and computer software. Whether a certain function is performed by hardware or by computer software driving hardware, depends on a specific application and a design constraint of the technical solutions. Professional technicians may use different methods to achieve the described functions, for each specific application, but such implementation should not be considered beyond the scope of the present disclosure.

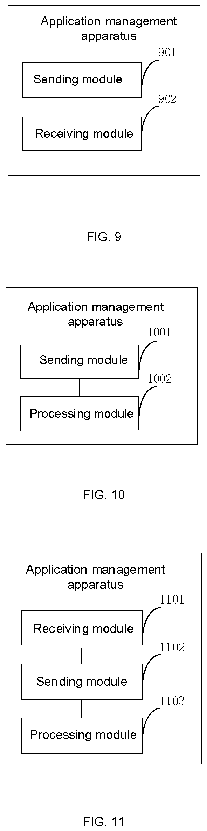

Based on this understanding, taking hardware structures and/or software modules contained in the application store as an example, the embodiments of the present disclosure further provide an application management apparatus correspondingly, which may be applied to the above-described first application warehouse (e.g., a hardware device corresponding to the application store). FIG. 9 is a structural schematic diagram of an application management apparatus provided by the embodiments of the present disclosure. As shown in FIG. 9, the application management apparatus may include a sending module 901 and a receiving module 902.

The sending module 901 is configured to send a first download request to an application store, where the first download request is used to request to download a first application in the application store, and the first application is stored in the application store. The receiving module 902 is configured to receive the first application from the application store.

In some implementations, the first application has an association relationship with a second application in the application store, and is capable of calling the second application to implement a function of the second application. The receiving module is further configured to receive the second application from the application store.

In some implementations, the first application includes first information, and the first information is used to indicate the second application associated with the first application.

In some implementations, the first information includes an identifier of the second application. Identifiers of different applications in the application store are different.

The embodiments of the present disclosure further provide an application management apparatus correspondingly, which may be applied to the above-described second application warehouse. FIG. 10 is another structural schematic diagram of an application management apparatus provided by the embodiments of the present disclosure. As shown in FIG. 10, the application management apparatus may include a sending module 1001 and a processing module 1002.

The sending module 1001 is configured to send a second download request to an application store, where the second download request is used to request to download a second application from the application store. The processing module 1002 is configured to generate a first application based on the second application.

In some implementations, the sending module 1001 is further configured to send an application upload request to the application store, where the application upload request is used to indicate that the first application is to be uploaded to the application store. The sending module 1001 is further configured to send the first application to the application store.

In some implementations, the processing module 1002 is further configured to establish an association relationship between the first application and the second application, where the first application is capable of calling the second application to implement a function of the second application. The processing module 1002 is further configured to generate the first application based on the second application according to the association relationship. The sending module 1001 is further configured to send the first application to the application store, the first application including the association relationship between the first application and the second application.

The embodiments of the present disclosure further provide an application management apparatus correspondingly, which may be applied to the above-described application store. FIG. 11 is another structural schematic diagram of an application management apparatus provided by the embodiments of the present disclosure. As shown in FIG. 11, the application management apparatus may include: a receiving module 1101, a sending module 1102 and a processing module 1103.

The receiving module 1101 is configured to receive a first download request from a first application warehouse, where the first download request is used to request to download a first application in the application store. The sending module 1102 is configured to send the first application to the first application warehouse in response to the first download request.

In some implementations, the receiving module 1101 is further configured to receive the first application from a second application warehouse, in response to an application upload request sent by the second application warehouse.

In some implementations, a second application is stored in the application store. The receiving module 1101 is further configured to receive a second download request from a second application warehouse, where the second download request is used to request to download the second application. The sending module 1102 is further configured to send the second application to the second application warehouse.

In some implementations, the apparatus further includes the processing module 1103. The processing module 1103 is further configured to establish an association relationship between the first application and the second application. The first application is capable of calling the second application to implement a function of the second application.

In some implementations, the first application includes first information, and the first information is used to indicate the second application associated with the first application.

In some implementations, the sending module 1102 is further configured to send the first application and the second application to the first application warehouse in response to the first download request, where the first application includes the association relationship between the first application and the second application.

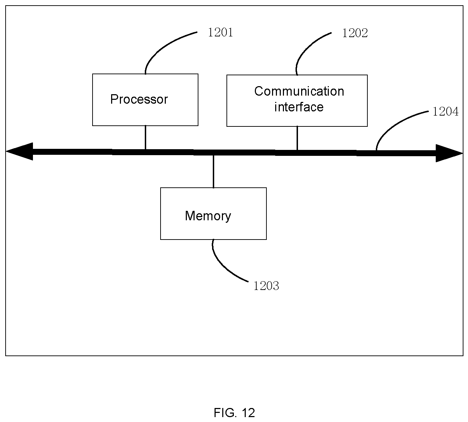

FIG. 12 shows yet another possible structure of an application management apparatus involved in the above-described embodiments. The application management apparatus includes: a processor 1201 and a communication interface 1202. The processor 1201 is configured to control and manage actions of the apparatus, for example, to perform various steps in the method flows shown in the above-described method embodiments, and/or to perform other processes of the technologies described herein. The communication interface 1202 is configured to support the communication between the application management apparatus and other network entities. The application management apparatus may further include a memory 1203 and a bus 1204, and the memory 1203 is configured to store program codes and data of the apparatus.

Here, the above processor 1201 may implement or perform various exemplary logical blocks, units and circuits described in conjunction with the contents of the present disclosure. The processor may be a central processing unit, a general-purpose processor, a digital signal processor, an application-specific integrated circuit, a field programmable gate array or other programmable logic device, a transistor logic device, a hardware component, or any combination thereof. The processor may implement or perform various exemplary logical blocks, units and circuits described in conjunction with the contents of the present disclosure. The processor may also be a combination for implementing computing functions, for example, including a combination of one or more microprocessors, a combination of a digital signal processor (DSP) and a microprocessor, or the like.

The memory 1203 may include a volatile memory, such as a random access memory; the memory may also include a non-volatile memory, such as a read-only memory, a flash memory, a hard disk or solid state disk; the memory may also include a combination of the above types of memories.

The bus 1204 is an extended industry standard architecture (EISA) bus or the like. The bus 1204 may be classified into an address bus, a data bus, a control bus, etc. For ease of representation, only one bold line is used in FIG. 12, but it does not mean that there is only one bus or one type of bus.

From the description of the above embodiments, those skilled in the art may clearly understand that, for convenience and brevity of the description, examples are only given with the above division of functional modules. In practical applications, the above functions may be allocated to different functional modules as needed. That is, an internal structure of the apparatus is divided into different functional modules, to complete all or a part of the functions described above. For the specific working process of the above-described system, apparatus, and unit, reference may be made to the corresponding process in the above-described method embodiments, which will not be repeated here.

As described above, the embodiments of the present disclosure may divide the respective execution entities involved in the application management method into functional modules according to the above method examples. Herein, the above-described integrated modules may be implemented in the form of hardware or may be implemented in the form of software functional modules. In addition, it should also be noted that the division of modules in the embodiments of the present disclosure is schematic and only a logical functional division. There may be other division manners in actual implementations. For example, respective functions may be divided into respective functional modules correspondingly, or two or more functions may be integrated into one processing module.

Regarding the application management apparatus in the above embodiments, the specific manners and the beneficial effects of respective modules thereof performing operations have been described in detail in the above method embodiments, and will not be repeated here.

The embodiments of the present disclosure further provide an electronic device, and the electronic device may be a hardware device corresponding to the application store, or a device at the development side, or the user device described above. The electronic device includes a processor and a memory for storing instructions executable by the processor. The processor is configured to when executing the instructions, cause the electronic device to implement the methods as described in the aforementioned embodiments.

In exemplary embodiments, the embodiments of the present disclosure further provide a computer-readable storage medium on which computer program instructions are stored. The computer program instructions, when executed by an electronic device, cause the electronic device to implement the methods as described in the aforementioned embodiments.

Optionally, the above-described computer-readable storage medium may be a non-transitory computer-readable storage medium, for example, the non-transitory computer-readable storage medium may be a read only memory (ROM), a random access memory (RAM), a compact disc read-only memory (CD-ROM), a magnetic tape, a floppy disk, and an optical data storage device, or the like.

In exemplary embodiments, the embodiments of the present disclosure further provide a computer program product including computer-readable codes, or a non-volatile computer-readable storage medium carrying computer-readable codes. When the computer-readable codes are executed in an electronic device, a processor in the electronic device implements the methods as described in the aforementioned embodiments.

Those skilled in the art, after considering the specification and practicing the invention disclosed here, will easily conceive of other implementations of the present disclosure. The present disclosure is intended to cover any variations, usage, or adaptive changes of the present disclosure, and these variations, usage, or adaptive changes follow the general principles of the present disclosure and include common knowledge or customary technical means in the art, which are not disclosed in the present disclosure. The specification and the embodiments are regarded as exemplary only, and a true scope and spirit of the present disclosure are indicated by the claims as follows.

It should be understood that the present disclosure is not limited to the precise structures described above and shown in the drawings, and various modifications and changes may be made therein without departing from its scope. The scope of the present disclosure is limited by the appended claims only.

## Claims

1. An application management method, **characterized in that** the method is applied to a first application warehouse, and the method comprises:
sending a first download request to an application store, wherein the first download request is used to request to download a first application in the application store, and the first application is stored in the application store; and
receiving the first application from the application store.

2. The method according to claim 1, wherein the first application has an association relationship with a second application in the application store, and is capable of calling the second application to implement a function of the second application; and
after sending the first download request to the application store, the method further comprises:
receiving the second application from the application store.

3. The method according to claim 2, wherein
the first application comprises first information, and the first information is used to indicate the second application associated with the first application.

4. The method according to claim 3, wherein
the first information comprises an identifier of the second application; and
identifiers of different applications in the application store are different.

5. An application management method, **characterized in that** the method is applied to a second application warehouse, and the method comprises:
sending a second download request to an application store, wherein the second download request is used to request to download a second application from the application store; and
generating a first application based on the second application.

6. The method according to claim 5, wherein the method further comprises:
sending an application upload request to the application store, wherein the application upload request is used to indicate that the first application is to be uploaded to the application store; and
sending the first application to the application store.

7. The method according to claim 5 or 6, wherein generating the first application based on the second application, comprises:
establishing an association relationship between the first application and the second application, wherein the first application is capable of calling the second application to implement a function of the second application; and
generating the first application based on the second application according to the association relationship;
wherein sending the first application to the application store comprises:
sending the first application to the application store, the first application comprising the association relationship between the first application and the second application.

8. An application management method, **characterized in that** the method is applied to an application store, and the method comprises:
receiving a first download request from a first application warehouse, wherein the first download request is used to request to download a first application in the application store; and
sending the first application to the first application warehouse in response to the first download request.

9. The method according to claim 8, wherein before receiving the first download request from the first application warehouse, the method further comprises:
receiving the first application from a second application warehouse, in response to an application upload request sent by the second application warehouse.

10. The method according to claim 8 or 9, wherein a second application is stored in the application store, and the method further comprises:
receiving a second download request from a second application warehouse, wherein the second download request is used to request to download the second application; and
sending the second application to the second application warehouse.

11. The method according to claim 10, wherein the method further comprises:
establishing an association relationship between the first application and the second application;
wherein the first application is capable of calling the second application to implement a function of the second application.

12. The method according to claim 11, wherein
the first application comprises first information, and the first information is used to indicate the second application associated with the first application.

13. The method according to claim 12, wherein sending the first application to the first application warehouse in response to the first download request, comprises:
sending the first application and the second application to the first application warehouse in response to the first download request, wherein the first application comprises the association relationship between the first application and the second application.

14. An application management apparatus, **characterized in that** the apparatus is applied to a first application warehouse, and the apparatus comprises:
a sending module, configured to send a first download request to an application store, wherein the first download request is used to request to download a first application in the application store, and the first application is stored in the application store; and
a receiving module, configured to receive the first application from the application store.

15. The apparatus according to claim 14, wherein the first application has an association relationship with a second application in the application store, and is capable of calling the second application to implement a function of the second application; and
the receiving module is further configured to receive the second application from the application store.

16. The apparatus according to claim 15, wherein
the first application comprises first information, and the first information is used to indicate the second application associated with the first application.

17. The apparatus according to claim 16, wherein
the first information comprises an identifier of the second application; and
identifiers of different applications in the application store are different.

18. An application management apparatus, **characterized in that** the apparatus is applied to a second application warehouse, and the apparatus comprises:
a sending module, configured to send a second download request to an application store, wherein the second download request is used to request to download a second application from the application store; and
a processing module, configured to generate a first application based on the second application.

19. The apparatus according to claim 18, wherein
the sending module is further configured to send an application upload request to the application store, wherein the application upload request is used to indicate that the first application is to be uploaded to the application store; and
the sending module is further configured to send the first application to the application store.

20. The apparatus according to claim 18 or 19, wherein
the processing module is further configured to establish an association relationship between the first application and the second application, wherein the first application is capable of calling the second application to implement a function of the second application;
the processing module is further configured to generate the first application based on the second application according to the association relationship; and
the sending module is further configured to send the first application to the application store, the first application comprising the association relationship between the first application and the second application.

21. An application management apparatus, **characterized in that** the apparatus is applied to an application store, and the apparatus comprises:
a receiving module, configured to receive a first download request from a first application warehouse, wherein the first download request is used to request to download a first application in the application store; and
a sending module, configured to send the first application to the first application warehouse in response to the first download request.

22. The apparatus according to claim 21, wherein
the receiving module is further configured to receive the first application from a second application warehouse, in response to an application upload request sent by the second application warehouse.

23. The apparatus according to claim 21 or 22, wherein a second application is stored in the application store;
the receiving module is further configured to receive a second download request from a second application warehouse, wherein the second download request is used to request to download the second application; and
the sending module is further configured to send the second application to the second application warehouse.

24. The apparatus according to claim 23, wherein the apparatus further comprises a processing module;
the processing module is further configured to establish an association relationship between the first application and the second application; and
the first application is capable of calling the second application to implement a function of the second application.

25. The apparatus according to claim 24, wherein
the first application comprises first information, and the first information is used to indicate the second application associated with the first application.

26. The apparatus according to claim 25, wherein
the sending module is further configured to send the first application and the second application to the first application warehouse in response to the first download request, wherein the first application comprises the association relationship between the first application and the second application.

27. An electronic device, **characterized by** comprising: a processor; a memory; and a computer program; wherein the computer program is stored on the memory, and the computer program, when executed by the processor, causes the electronic device to implement the method according to any one of claims 1 to 4, or the method according to claim 6 or 7, or the method according to any one of claims 8 to 13.

28. A computer-readable storage medium, **characterized by** comprising a computer program, wherein the computer program, when running on an electronic device, causes the electronic device to implement the method according to any one of claims 1 to 4, or the method according to claim 6 or 7, or the method according to any one of claims 8 to 13.

29. A computer program product, **characterized by** comprising a computer-readable code, or a non-volatile computer-readable storage medium carrying a computer-readable code, wherein when the computer-readable code runs in an electronic device, a processor in the electronic device implements the method according to any one of claims 1 to 4, or the method according to claim 6 or 7, or the method according to any one of claims 8 to 13.
